# EUROPEAN PATENT APPLICATION

(11) **EP 1 900 795 A1**
(43) Date of publication of application: **19.03.2008**
(21) Application number: 07111870.7
(22) Date of filing: 05.07.2007
(51) Int. Cl.: C10L 1/222, C10L 10/18, F02M 65/00, F02M 61/18, C10L 1/14, C10L 10/02

(54) **Method and use for the prevention of fuel injector deposits**

(30) Priority: 07.09.2006 EP 06120323
(71) Applicant: Infineum International Limited, Abingdon, Oxfordshire OX13 6BB (GB)
(72) Inventor: Breakspear, Angela Priscilla, Dr., Abingdon Oxfordshire OX13 6BB (GB); Caprotti, Rinaldo, Abingdon Oxfordshire OX13 6BB (GB)
(74) Representative: Capaldi, Michael Joseph

(57) **Abstract**

A method of substantially removing, or reducing the occurrence of, injector deposits in a diesel engine operated using a diesel fuel containing a minor amount of a metal-containing species. The method comprises adding to the diesel fuel a salt formed by the reaction of a carboxylic acid with di-n-butylamine or tri-n-butylamine, wherein the diesel engine is equipped with fuel injectors having a plurality of spray-holes, each spray-hole having an inlet and an outlet, and wherein the fuel injectors have one or more of the following characteristics:
(i) spray-holes which are tapered such that the inlet diameter of the spray-holes is greater than the outlet diameter;
(ii) spray-holes having an outlet diameter of 0.10 mm or less;
(iii) spray-holes where an inner edge of the inlet is rounded;
(iv) 6 or more spray-holes;
(v) an operating tip temperature in excess of 250°C.

The use of the salt to substantially remove, or reduce the occurrence of, injector deposits is also described.

## Description

This invention relates to a method for the removal or prevention of fuel injector deposits in diesel engines, in particular to the removal or prevention of fuel injector deposits in modern diesel engines. Uses of reaction products to remove or prevent fuel injector deposits are described.

There is continued legislative pressure to reduce emissions from diesel engines. In Europe by 2008, all new diesel engines must comply with the Euro V specification. This has resulted in the development of advanced fuel injection equipment characterised by fuel injectors which have complex spray-hole geometries, multiple and narrow spray-holes and which operate with high temperatures and pressures at the injector tips. As a consequence of this increasing severity in operating conditions, the injectors of modern common-rail diesel engines are prone to the formation of deposits. These deposits, which are found both inside and outside the spray-holes of the injector nozzles, contribute directly to loss in engine power and increase in smoke production.

The formation of deposits on diesel fuel injectors is not a new phenomenon and historically any problem has been adequately addressed by the use of conventional diesel detergent additives. It has been observed however, that the types of deposits formed under the more severe operating conditions of engines which are being developed to be Euro V compliant are not adequately removed or prevented by conventional diesel detergent additives. Although not wishing to be bound by any theory, it is presently thought that the formation of injector deposits in modern engines is exacerbated by the presence of minor amounts of metal-containing species in the fuel. Indeed, the Applicant's studies have indicated that the use of fuels with negligible amounts of metal-containing contamination do not result in any significant problems with deposits. However, normal diesel fuels will often contain low but measurable amounts of metal-containing contamination, for example, zinc, copper, iron and lead, and metal-containing species may also be deliberately added to perform other functions. Analysis of the deposits formed in modern diesel engines indicates that, in addition to the expected carbonaceous materials, metals such as zinc and copper can be detected. The present invention specifically addresses the removal and prevention of these new types of injector deposits.

In accordance with a first aspect, the present invention provides a method of substantially removing, or reducing the occurrence of, injector deposits in a diesel engine operated using a diesel fuel containing a minor amount of a metal-containing species, the method comprising adding to the diesel fuel a salt formed by the reaction of a carboxylic acid with di-n-butylamine or tri-n-butylamine, wherein the diesel engine is equipped with fuel injectors having a plurality of spray-holes, each spray-hole having an inlet and an outlet, and wherein the fuel injectors have one or more of the following characteristics:
(i) spray-holes which are tapered such that the inlet diameter of the spray-holes is greater than the outlet diameter;
(ii) spray-holes having an outlet diameter of 0.10 mm or less;
(iii) spray-holes where an inner edge of the inlet is rounded;
(iv) 6 or more spray-holes;
(v) an operating tip temperature in excess of250°C.

In accordance with a second aspect, the present invention provides the use of a salt formed by the reaction of a carboxylic acid with di-n-butylamine or tri-n-butylamine to substantially remove, or reduce the occurrence of, injector deposits in a diesel engine, the diesel engine being equipped with fuel injectors having one or more of characteristics (i) to (v) as defined in relation to the first aspect and operated using a diesel fuel containing a minor amount of a metal-containing species.

It has been found that the salt used in the first and second aspects is effective at reducing the incidence of deposits in modern diesel engine fuel injectors, and is at least as effective as the widely used PIBSA-PAM detergents at an equivalent or lower treat rate. It was surprising to note however that in older type diesel engines, such as those used in the industry standard XUD-9 detergency test, the salt of use in the present invention was outperformed by conventional PIBSA-PAM detergents.

As discussed above, the incidence of injector deposits appears to be connected to the presence of metal-containing species in the fuel. Some diesel fuels will contain no measurable metal content, in which case the incidence of injector deposits will be reduced. However, the presence or absence of metal-containing species in diesel fuels is generally not apparent to the user and will vary with fuel production, even with fuels from the same supplier. The present invention is thus useful in those instances where metal-containing species are present and also as a preventative measure to lessen the impact of injector deposits when re-fuelling with a fuel of unknown metal content.

In the context of all aspects of the present invention, substantial removal of injector deposits should be taken to mean that deposits which may be present on the inside or outside of the spray-holes of the injector nozzles are removed to the extent that the proper functioning of the injector is not significantly impaired. This may be determined for example by measuring increases in exhaust smoke or loss in engine torque. It is not required that all traces of injector deposit are removed. Similarly, a reduction in the occurrence of injector deposits does not require that no deposits whatsoever are formed, only again that the amount of any deposit which may form is not sufficient to significantly impair the proper functioning of the injector.

It is presently thought that the characteristics (i) to (v) of the fuel injectors all contribute to the formation of injector deposits. It has been observed that diesel engines employing fuel injectors which have a plurality of these characteristics are more prone to deposit formation. Thus in embodiments of the invention, the fuel injectors have two, preferably three, more preferably four, most preferably all five of characteristics (i) to (v).

In a preferred embodiment, the fuel injectors have at least characteristics (i) and (ii). In a more preferred embodiment, the fuel injectors have at least characteristics (i), (ii) and (iii). In an even more preferred embodiment, the fuel injectors have at least characteristics (i), (ii), (iii) and (iv).

In this specification, the use of the term 'salt' to describe the product formed by the reaction of the carboxylic acid and the amine should not be taken to mean that the reaction necessarily forms a pure salt. It is presently believed that the reaction does form a salt and thus that the reaction product contains such as salt however, due to the complexity of the reaction, it is likely that other species will also be present. The term 'salt' should thus be taken to include not only the pure salt species, but also the mixture of species formed during the reaction of the carboxylic acid and the amine.

As carboxylic acid, those corresponding to the formula [R'(COOH)ₓ]_{y}, where each R' is independently a hydrocarbon group of between 2 and 45 carbon atoms, and x is an integer between 1 and 4, are suitable. Preferably, R' is a hydrocarbon group of 8 to 24 carbon atoms, more preferably, 12 to 20 carbon atoms. Preferably, x is 1 or 2, more preferably, x is 1. Preferably, y is 1, in which case the acid has a single R' group. Alternatively, the acid may be a dimer, trimer or higher oligomer acid, in which case y will be greater than 1 for example 2, 3 or 4 or more. R' is suitably an alkyl or alkenyl group which may be linear or branched. Examples of carboxylic acids which may be used in the present invention include: lauric acid, myristic acid, palmitic acid, stearic acid, isostearic acid, neodecanoic acid, arachic acid, behenic acid, lignoceric acid, cerotic acid, montanic acid, melissic acid, caproleic acid, oleic acid, elaidic acid, linoleic acid, linolenic acid, coconut oil fatty acid, soy bean fatty acid, tall oil fatty acid, sunflower oil fatty acid, fish oil fatty acid, rapeseed oil fatty acid, tallow oil fatty acid and palm oil fatty acid. Mixtures of two or more acids in any proportion are also suitable. Also suitable are the anhydrides of carboxylic acids, their derivatives and mixtures thereof In a preferred embodiment, the carboxylic acid comprises tall oil fatty acid (TOFA). It has been found that TOFA with a saturate content of less than 5% by weight is especially suitable. As is known in the art, TOFA contains small but variable amounts of rosin acids and isomers thereof. Preferably, TOFA with an abietic acid content of less than 5% by weight, for example, less than 2% by weight, is used.

In another preferred embodiment, the carboxylic acid comprises rapeseed oil fatty acid.

In another preferred embodiment, the carboxylic acid comprises soy bean fatty acid.

In another preferred embodiment, the carboxylic acid comprises sunflower oil fatty acid.

Also suitable are aromatic carboxylic acids and their alkyl derivatives as well as aromatic hydroxy acids and their alkyl derivatives. Illustrative examples include benzoic acid, salicylic acid and acids derived from such species.

Preferably, the carboxylic acid has an iodine value of at least 80g/100g, more preferably at least 100 g/100g, for example, at least 130 g/100g or at least 150 g/100g.

Conveniently, either di-n-butylamine or tri-n-butylamine is used although mixtures of the two may also be used if desired. Most preferably, the salt is formed by the reaction with di-n-butylamine.

Particularly preferred embodiments of the present invention are thus where the salt is formed by the reaction of:
Tall oil fatty acid with di-n-butylamine,
Tall oil fatty acid with tri-n-butylamine,
Rapeseed oil fatty acid with di-n-butylamine,
Rapeseed oil fatty acid with tri-n-butylamine,
Soy bean fatty acid with di-n-butylamine,
Soy bean fatty acid with tri-n-butylamine,
Sunflower oil fatty acid with di-n-butylamine, and
Sunflower oil fatty acid with tri-n-butylamine.

The salt may conveniently be produced by mixing the carboxylic acid with the amine. The order in which one component is added to the other is not important. The molar ratio of the amount of acid to the amount of amine is suitably from 10:1 to 1:10, preferably from 10:1 to 1:2, more preferably from 2:1 to 1:2, for example, around 1:1. In an embodiment, a molar ratio of 1.1:1 to 1:1.1 has been found to be suitable. The reaction may be conducted at room temperature, but is preferably heated gently, for example to 40°C.

These salts are the subject of the present Applicant's co-pending application EP 05270062.2 where in addition to providing good lubricity to fuel oil compositions they were found to display particularly good low temperature properties.

### The diesel fuel

Preferably, the diesel fuel is a petroleum-based fuel oil, especially a middle distillate fuel oil. Such distillate fuel oils generally boil within the range of from 110°C to 500°C, e.g. 150°C to 400°C. The fuel oil may comprise atmospheric distillate or vacuum distillate, cracked gas oil, or a blend in any proportion of straight run and thermally and/or refinery streams such as catalytically cracked and hydro-cracked distillates.

Other examples of diesel fuels include Fischer-Tropsch fuels. Fischer-Tropsch fuels, also known as FT fuels, include those described as gas-to-liquid (GTL) fuels, biomass-to-liquid (BTL) fuels and coal conversion fuels. To make such fuels, syngas (CO + H₂) is first generated and then converted to normal paraffins by a Fischer-Tropsch process. The normal paraffins may then be modified by processes such as catalytic cracking/reforming or isomerisation, hydrocracking and hydroisomerisation to yield a variety of hydrocarbons such as iso-paraffins, cyclo-paraffins and aromatic compounds. The resulting FT fuel can be used as such or in combination with other fuel components and fuel types. Also suitable are diesel fuels derived from plant or animal sources such as FAME. These may be used alone or in combination with other types of fuel.

Preferably, the diesel fuel does not contain an alcohol component.

Preferably, the diesel fuel does not contain a significant quantity of water.

Preferably, the diesel fuel has a sulphur content of at most 0.05% by weight, more preferably of at most 0.035% by weight, especially of at most 0.015%. Fuels with even lower levels of sulphur are also suitable such as, fuels with less than 50ppm sulphur by weight, preferably less than 20 ppm, for example 10ppm or less.

As discussed herein, the Applicants have observed that the problems associated with the formation of injector deposits in engines being developed to be Euro V compliant are associated with the presence of metal-containing species in the diesel fuel. Commonly when present, metal-containing species will be present as a contaminant, for example through the corrosion of metal and metal oxide surfaces by acidic species present in the fuel. In use, fuels such as diesel fuels routinely come into contact with metal surfaces for example, in vehicle fuelling systems, fuel tanks, fuel transportation means etc. Typically, metal-containing contamination will comprise metals such as zinc, iron, copper and lead.

In addition to metal-containing contamination which may be present in diesel fuels there are circumstances where metal-containing species may deliberately be added to the fuel. For example, as is known in the art, metal-containing fuel-borne catalyst species may be added to aid with the regeneration of particulate traps. Such catalysts are often based on metals such as iron, cerium, Group I and Group II metals e.g., calcium and strontium, either as mixtures or alone. Also used are platinum and manganese. The presence of such catalysts may also give rise to injector deposits when the fuels are used in engines being developed to be Euro V compliant.

Metal-containing contamination, depending on its source, may be in the form of insoluble particulates or soluble compounds or complexes. Metal-containing fuel-borne catalysts are often soluble compounds or complexes or colloidal species. It will be understood that metal-containing species in the context of the present invention include both species which are metallic and those where the metal constituent is in compounded form.

In an embodiment, the metal-containing species comprises a fuel-borne catalyst.

In a preferred embodiment, the metal-containing species comprises zinc.

Typically, the amount of metal-containing species in the diesel fuel, expressed in terms of the total weight of metal in the species, is between 0.1 and 50 ppm by weight, for example between 0.1 and 10 ppm by weight, based on the weight of the diesel fuel.

Typically, the amount of the salt present in the diesel fuel is between 20 and 400 ppm by weight based on the weight of the diesel fuel, preferably between 50 and 200 ppm.

### Fuel injector characteristics

Historically, diesel engine fuel injectors have been simple in design. In recent years, the connection between injector design and engine performance has become better understood. For example, the knowledge that a fine distribution of fuel droplets promotes a decrease in emissions has led to a gradual narrowing of fuel injector spray-holes and increased injector pressures. As mentioned hereinabove, the drive to meet the upcoming Euro V emissions specification has led to further advances in fuel injector design.

### (i) Tapered spray-holes

The majority of fuel injectors have spray-holes which are uniform in cross-section. In the present invention, preferably the spray-holes are tapered such that diameter at the point where the fuel enters the spray-hole (the inlet) is greater than the diameter at the point where the fuel exits the spray-hole (the outlet). Most typically, the spray-holes will be conical or frusto-conical in shape.

### (ii) Spray-hole diameter

The spray-holes preferably have an outlet diameter of 0.10mm or less, more preferably 0.08mm or less. This may be compared to injectors of 10 to 15 years ago which had spray-holes of typically 0.25mm.

### (iii) Rounded spray-holes

In the context of the present invention, rounded spray-holes are those where the inner edge of the inlet of the hole has been formed, smoothed or eroded to have a curved or radial profile, rather than an angled profile.

### (iv) Multiple spray-holes

Historically, fuel injectors have had up to four spray-holes. The present invention relates to fuel injectors preferably having 6 or more spray-holes, for example 6, 7, 8, 9, 10 or more. It is anticipated that future designs of fuel injectors will have even more spray-holes.

### (v) Operating tip temperature

The combination of lower fuel flow due to a large number of spray-holes, higher fuel pressures and complex spray-hole geometry leads to increased injector tip temperatures. Typically, the fuel injectors will have an operating tip temperature in excess of 250°C, preferably in excess of 300°C. It will be understood that the operating tip temperature of the fuel injectors refers to the temperature of the injector tip during normal running of the diesel engine. Those skilled in the art will be aware of methodologies to measure the injector tip temperature, for example by the use of suitably placed thermocouples.

Characteristics (i) to (iv) result in a less turbulent fuel flow through the injector. Whilst this is generally advantageous, it lessens the possibility for the fuel to physically erode any deposits which may be present. The increase in operating tip temperature is also thought to contribute to the formation of deposits.

The invention will now be described by way of example only.

### Preparation of the salt

### Example

Rape seed oil fatty acid (ROFA) (50.0g, 173mmoles) was added to a beaker with stirring. Di-n-butylamine (22.36g, 173mmoles) was then added to the beaker. An exotherm of was measured indicating that the two components reacted. FTIR analysis of the reaction product showed a reduction in the strong carboxylic acid peak at 1710cm⁻¹ compared to the starting acid, and a corresponding appearance of carboxylate antisymmetric and symmetric stretches at 1553 and 1399 cm⁻¹ as well as the appearance of a broad range of peaks 2300-2600cm⁻¹ assignable to ammonium species. This was a clear indication of the formation of a salt.

### Test protocol

The protocol used is described by Graupner et al. "Injector deposit test for modern diesel engines", Technische Akademie Esslingen, 5th International Colloquium, 12-13 Jan 2005, 3.10, p157, Edited by Wilfried J Bartz*.* Briefly, the protocol aims to replicate the operating conditions in a modern diesel engine with an emphasis on the fuel injector tip. The test is split into five stages:
a) an iso-speed measurement of engine power output
b) an 8 hour endurance run
c) an extended soaking period (3 to 8 hours) during which the engine is stopped and allowed to cool
d) a second 8 hour endurance run
e) an iso-speed measurement of engine power output.

For the data presented herein, the five stages above were used however, stages b) ,c) and d) can be repeated any number of times to suit the testing programme being undertaken. Also, stages a) and e) may be omitted but are useful to improve understanding of the results. Results are reported as the difference between the average torque at the start of the test during stage a) and the average torque at the end of the test during stage e). Alternatively, if the isospeed procedure is not run, the measured difference between starting torque at full load/full speed and final load/speed can be used. Differences in smoke production are also noted. The formation of injector deposits will have a negative influence on the final power output and will increase the amount of smoke observed. The injectors used had the physical characteristics (i) - (v) described above.

To replicate the conditions expected in a modern diesel engine, a small amount of metal contamination in the form of zinc neodecanoate is added to the fuel used to run the engine.

The fuel used was a low-sulphur content diesel fuel with the characteristics shown in Table 1 below.

**Table 1**

| **Test description** | **Value** | **Units** |
|---|---|---|
| sulphur content | 0.0005 | mass % |
| cetane number | 55.4 | - |
| density @ 15°C | 844.9 | kgm⁻³ |
| distillation characteristics | | |
| D5% | 204.8 | °C |
| D10% | 211.6 | °C |
| D20% | 222.2 | °C |
| D30% | 232.2 | °C |
| D40% | 242.1 | °C |
| D50% | 252.3 | °C |
| D60% | 262.8 | °C |
| D70% | 275.1 | °C |
| D80% | 290.5 | °C |
| D90% | 315.1 | °C |
| D95% | 337.1 | °C |
| FBP | 353.6 | °C |
| IBP | 179.7 | °C |
| kinematic viscosity @ 20°C | 3.935 | cSt |
| kinematic viscosity @ 40°C - D445 | | |
| cloud point | -14.0 | °C |
| CFPP | -33.0 | °C |

The species were tested using the test protocol described above. Results are given in Table 2 below. A conventional PIBS-PAM detergent was also tested by way of comparison .3 ppm of Zn in the form of zinc neodecanoate was added to the fuel for all tests (except for the untreated fuel alone).

**Table 2**

| **Species** | **Treat rate wppm (active ingredient)** | **Torque loss** |
|---|---|---|
| Untreated fuel | - | 4.3% |
| Untreated fuel + 3 ppm Zn | - | 15.3% |
| PIBSA-PAM | 100 | 14.0% |
| PIBSA-PAM | 200 | 8.2% |
| Salt of Example 1 | 60 | 12.5% |
| Salt of Example 1 | 180 | 7.1% |

The results show that the addition of zinc to the untreated fuel gives rise to a large increase in torque loss. The commercial PIBSA-PAM detergent only gave a marginal improvement at a treat rate of 100ppm. The PIBSA-PAM detergent was effective at high treat rate. The salt provided a greater improvement than the commercial detergent, and importantly at a lower treat rate.

## Claims

1. A method of substantially removing, or reducing the occurrence of, injector deposits in a diesel engine operated using a diesel fuel containing a minor amount of a metal-containing species, the method comprising adding to the diesel fuel a salt formed by the reaction of a carboxylic acid with di-n-butylamine or tri-n-butylamine, wherein the diesel engine is equipped with fuel injectors having a plurality of spray-holes, each spray-hole having an inlet and an outlet, and wherein the fuel injectors have one or more of the following characteristics:
(i) spray-holes which are tapered such that the inlet diameter of the spray-holes is greater than the outlet diameter;
(ii) spray-holes having an outlet diameter of 0.10 mm or less;
(iii) spray-holes where an inner edge of the inlet is rounded;
(iv) 6 or more spray-holes;
(v) an operating tip temperature in excess of 250°C.

2. A method according to claim 1, wherein the fuel injectors have two, preferably three, more preferably four, most preferably all five of characteristics (i) to (v).

3. A method according to claim 1 or claim 2 wherein the fuel injectors have at least characteristics (i) and (ii), preferably at least characteristics (i), (ii) and (iii), more preferably at least characteristics (i), (ii), (iii) and (iv).

4. A method according to any preceding claim, wherein the carboxylic acid comprises a fatty acid or a mixture of fatty acids, preferably tall oil fatty acid, rape seed oil fatty acid, soy bean fatty acid or sunflower oil fatty acid.

5. A method according to any preceding claim wherein the salt is added to the diesel fuel in an amount of between 20 and 400 ppm by weight, based on the weight of the fuel.

6. A method according to any preceding claim wherein the metal-containing species comprises zinc, copper, iron, lead, cerium, a Group I or II metal, platinum or manganese.

7. A method according to claim 6 wherein the metal-containing species comprises zinc.

8. A method according to any preceding claim wherein the metal-containing species comprises a fuel-borne catalyst.

9. A method according to any preceding claim wherein the amount of metal-containing species in the diesel fuel, expressed in terms of the total weight of metal in the species, is between 0.1 and 50 ppm by weight, based on the weight of the diesel fuel.

10. The use of a salt formed by the reaction of a carboxylic acid with di-n-butylamine or tri-n-butylamine to substantially remove, or reduce the occurrence of, injector deposits in a diesel engine, the diesel engine being equipped with fuel injectors having one or more of characteristics (i) to (v) as defined in claim 1 and operated using a diesel fuel containing a minor amount of a metal-containing species.

11. A method according to any of claims 1 to 9, or a use according to claim 10, wherein the diesel fuel does not contain an alcohol component.
